# EUROPÄISCHE PATENTANMELDUNG

(11) **EP 0 882 617 A2**
(43) Veröffentlichungstag der Anmeldung: **09.12.1998**
(21) Anmeldenummer: 98109620.9
(22) Anmeldetag: 27.05.1998
(51) Int. Cl.: B60K 15/035, B60K 15/04

(54) **Vorrichtung zum Steuern der Gasströme und Flüssigkeitsniveaus in einem ORVR-Betankungssystem**

(30) Priorität: 06.06.1997 AT 973/97
(71) Anmelder: Tesma Motoren- und Getriebetechnik Ges.m.b.H., 8160 Preding-Krottendorf (AT)
(72) Erfinder: Pozgainer, Günther, Dr. Dipl.-Ing., 8010 Graz (AT); Palvölgyi, Sandor, Dipl.-Ing., 8200 Gleisdorf (AT); Maier, Bernhard, 8344 Bad Gleichenberg (AT)
(74) Vertreter: Weiser, Andreas

(57) **Zusammenfassung**

Vorrichtung zum Steuern der Gasströme und Flüssigkeitsniveaus in einem ORVR-Betankungssystem, dessen Kraftstofftank (1) mit einem Einfüllstutzen (2), der einen eine Flüssigkeitssäule während des Tankvorganges aufbauenden Querschnitt aufweist, sowie mit einer großdurchmeßrigen Betankungsentlüftungsleitung (3) und einer kleindurchmeßrigen Betriebsentlüftungsleitung (4) versehen ist, wobei die Betankungs- und die Betriebsentlüftungsleitung (3, 4) über ein gemeinsames Mehrwegeventil (5) zu einem Kraftstoffdampfauffangbehälter geführt sind, welches Mehrwegeventil (5) durch Einführen einer Zapfpistole (9) in den Einfüllstutzen (2) von einer Betankungsstellung, in der die Betankungsentlüftungsleitung (3) geöffnet und die Betriebsentlüftungsleitung (4) geschlossen ist, in eine Betriebsstellung, in welcher die Betriebsentlüftungsleitung (4) geöffnet und die Betankungsentlüftungsleitung (3) geschlossen ist, versetzbar ist, wobei eine an das obere Ende des Einfüllstutzens (2) angeschlossene kleindurchmeßrige Druckausgleichsleitung (12) mit dem Kraftstoffdampfauffangbehälter in Verbindung setzbar ist, und wobei die Druckausgleichsleitung (12) über eine gesonderte Schaltstrecke (13) des gemeinsamen Mehrwegeventil (5) geführt ist, welche die Druckausgleichsleitung (12) in der Betankungsstellung absperrt und in der Betriebsstellung durchschaltet.

## Beschreibung

Die vorliegende Erfindung betrifft eine Vorrichtung zum Steuern der Gasströme und Flüssigkeitsniveaus in einem ORVR-Betankungssystem, dessen Kraftstofftank mit einem Einfüllstutzen, der einen eine Flüssigkeitssäule während des Tankvorganges aufbauenden Querschnitt aufweist, sowie mit einer großdurchmeßrigen Betankungsentlüftungsleitung und einer kleindurchmeßrigen Betriebsentlüftungsleitung versehen ist, wobei die Betankungs- und die Betriebsentlüftungsleitung über ein gemeinsames Mehrwegeventil zu einem Kraftstoffdampfauffangbehälter geführt sind, welches Mehrwegeventil durch Einführen einer Zapfpistole in den Einfüllstutzen von einer Betankungsstellung, in der die Betankungsentlüftungsleitung geöffnet und die Betriebsentlüftungsleitung geschlossen ist, in eine Betriebsstellung, in welcher die Betriebsentlüftungsleitung geöffnet und die Betankungsentlüftungsleitung geschlossen ist, versetzbar ist, und wobei eine an das obere Ende des Einfüllstutzens angeschlossene kleindurchmeßrige Druckausgleichsleitung mit dem Kraftstoffdampfauffangbehälter in Verbindung setzbar ist.

Eine derartige Vorrichtung ist Teil eines sogenannten ORVR-Systems (Onboard Refuelling Vapor Recovery system), mit welchem die beim Betanken auftretenden Kraftstoffdämpfe am Fahrzeug ("on board") in einem üblicherweise mit einem Aktivkohlefilter ausgestatteten Auffangbehälter aufgefangen werden. Der Auffangbehälter wird im Fahrbetrieb von den Verbrennungszufuhrgasen durchspült, welche die Kraftstoffrückstände aus dem Aktivkohlefilter herauslösen und der Verbrennung zuführen.

Die geschilderte Vorrichtung ist insbesondere Teil eines sogenannten "liquid seal"-Systems, bei welchem die im Einfüllstutzen beim Tanken auftretende Flüssigkeitssäule gleichsam als "flüssige Dichtung" das Austreten von Kraftstoffdämpfen über den Einfüllstutzen verhindert. Zur Erzeugung der Flüssigkeitssäule wird ein Einfüllstutzen mit entsprechend engem Querschnitt verwendet. Der enge Querschnitt hat jedoch zur Folge, daß die Flüssigkeitssäule nach dem Tankvorgang im Einfüllstutzen stehen bleibt, wenn nicht gesonderte Maßnahmen zum Entleeren des Einfüllstutzens nach dem Tankvorgang ergriffen werden.

Zu diesem Zweck ist es bereits bekannt, am oberen Ende des Einfüllstutzens zusätzlich eine mit dem Kraftstoffdampfauffangbehälter in Verbindung stehende kleindurchmeßrige Druckausgangsleitung vorzusehen.

Diese Druckausgleichsleitung muß so abgesichert werden, daß ein Übertreten von Kraftstoff in den Kraftstoffdampfauffangbehälter beim Betanken verhindert wird. Die bislang zur Absicherung der Druckausgleichsleitung vorgeschlagenen Maßnahmen umfassen zusätzliche Rückschlagventile und Schaltventile in der Druckausgleichsleitung, was den Fertigungs- und Kostenaufwand entsprechend erhöht.

Die Erfindung setzt sich zum Ziel, eine besonders einfache, wirkunsvolle und kostenoptimierte Möglichkeit der Einfüllstutzenentleerung bei mit "liquid seal"-Effekt arbeitenden ORVR-Systemen zu schaffen. Dieses Ziel wird bei einer Vorrichtung der einleitend genannten Art erfindungsgemäß dadurch erreicht, daß die Druckausgleichsleitung über eine gesonderte Schaltstrecke des gemeinsamen Mehrwegeventil geführt ist, welche die Druckausgleichsleitung in der Betankungsstellung absperrt und in der Betriebsstellung durchschaltet.

Die erfindungsgemäße Konstruktion erübrigt die Verwendung gesonderter Rückschlag- und Steuerventile für die Druckausgleichsleitung des Einfüllstutzens, indem das für die Betankungs- und Betriebsentlüftungsleitung vorgesehene Mehrwegeventil mitverwendet wird. Es ist nur mehr ein einziges, direkt von der Zapfpistole gesteuertes Ventil zur Erfüllung aller oben genannten Anforderungen notwendig.

Die Erfindung läßt sich besonders vorteilhaft bei mit einem Überrollventil ausgestatteten ORVR-System anwenden. Als Überrollventil ("roll over valve") wird ein Ventil bezeichnet, das bei einem Überschlag des Fahrzeuges, wenn es von oben nach unten gekehrt wird, schließt. Ein derartiges Überrollventil wird in die während des Fahrbetriebes geöffnete Betriebsentlüftungsleitung eingeschaltet und verhindert bei einem Fahrzeugüberschlag das Austreten von Kraftstoff über die Betriebsentlüftungsleitung, den Kraftstofftankauffangbehälter und die ORVR-Rezyklierungsanlage.

Eine bevorzugte Ausführungsform der Erfindung besteht bei diesem Anwendungsfall darin, daß die Druckausgleichsleitung nach Passieren des Mehrwegeventiles gemeinsam mit der Betriebsentlüftungsleitung über das Überrollventil zum Kraftstoffdampfauffangbehälter geführt ist. Auf diese Weise ist lediglich ein einziges Überrollventil erforderlich, um auch die Druckausgleichsleitung gegen die Gefahr des Kraftstoffaustrittes abzusichern.

Besonders vorteilhaft ist es, wenn an das obere Ende der Betankungsentlüftungsleitung ein kleindurchmeßriger Druckausgleichskanal angeschlossen ist, der gemeinsam mit der Betriebsentlüftungsleitung und der Druckausgleichsleitung über das Überrollventil zum Kraftstoffdampfauffangbehalter geführt ist. Der Druckausgleichskanal dient - in gleicher Weise wie die Druckausgleichsleitung am oberen Ende des Einfüllstutzens - zum Abbau einer nach dem Tanken in der Betankungsentlüftungsleitung verbleibenden Flüssigkeitssäule und wird so durch das Überrollventil abgesichert.

In jedem Fall ist es besonders günstig, wenn gemäß einer bevorzugten Ausführungsform der Erfindung das Mehrwegeventil ein in die Betriebsstellung vorgespanntes, stößel- oder nockensteuerbares 6/2-Wegeventil ist, dessen Steuerstößel bzw. -nocken in das Innere des Einfüllstutzens ragt und von der Zapfpistole betätigbar ist, was eine besonders kompakte und kostenoptimierte Fertigung ermöglicht.

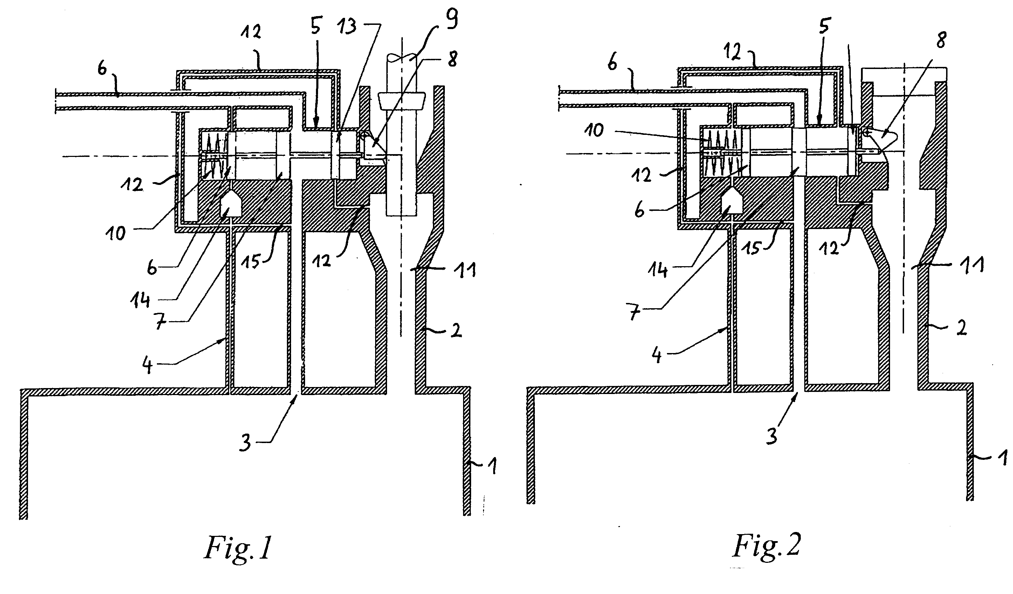

Die Erfindung wird nachstehend an Hand eines in den Zeichnungen dargestellten Ausführungsbeispieles näher erläutert. In den Zeichnungen zeigen die
Fig. 1 und 2 die Vorrichtung der Erfindung in der Betankungsstellung und der Betriebsstellung jeweils schematisch im Schnitt.

In den der Fig. 1 und 2 ist ein Kraftstofftank 1 gezeigt, an den ein Einfüllstutzen 2, eine großdurchmeßrige Betankungsentlüftungsleitung 3 und eine kleindurchmeßrige Betriebsentlüftungsleitung 4 angeschlossen sind. Der Anschlußort der Komponenten 2 bis 4 am Kraftstofftank 1 ist nur schematisch gezeigt; für den Fachmann ist klar, daß üblicherweise der Einfüllstutzen 2 in Bodennähe in den Kraftstofftank 1 mündet und die Betriebsentlüftungsleitung 4 von einem domförmigen Gasauffangraum an der Oberseite des Kraftstofftankes 1 ausgeht, welcher in Verbindung mit der Sperrung/Durchschaltung der Betriebsentlüftungsleitung 4 die in der Technik bekannte Überfüll-Verhinderungsfunktion ermöglicht.

Die Betankungsentlüftungsleitung 3 und die Betriebsentlüftungsleitung 4 sind über ein nachstehend erläutertes Mehrwegeventil 5 mit einer Abzugleitung 6 verbindbar, welche zu dem (nicht dargestellten) Kraftstoffdampfauffangbehälter eines ORVR-Rezyklierungssystems führt.

Das Mehrwegeventil 5 enthält einen Steuerkolben 6 für die Durchschaltung bzw. Sperrung der Betriebsentlüftungsleitung 4 und einen Steuerkolben 7 für die Durchschaltung bzw. Sperrung der Betankungsentlüftungsleitung 3. Die Steuerkolben 6, 7 werden über eine zentrale Kolbenstange und einen in das Innere des Einfüllstutzens 2 ragenden Steuernocken 8 beim Einführen einer (nicht weiter dargestellten) Zapfpistole 9 so betätigt, daß in der in Fig. 1 gezeigten Betankungsstellung die Betankungsentlüftungsleitung 3 geöffnet und die Betriebsentlüftungsleitung 4 geschlossen ist, hingegen in der in Fig. 2 gezeigten Betriebsstellung der umgekehrte Fall eintritt. Das Mehrwegeventil 5 ist durch eine Druckfeder 10 in die in Fig. 2 gezeigte Betriebsstellung federnd vorgespannt.

Wie in den Fig. 1 und 2 schematisch dargestellt, besitzt der Einfüllstutzen 2 einen bei 11 verengten Querschnitt, so daß sich während des Betankens eine Flüssigkeitssäule im Einfüllstutzen 2 aufbaut, welche das Austreten von Kraftstoffdämpfen über den Einfüllstutzen ins Freie verhindert. Die Querschnittsverengung 11 ist derart stark, daß nach dem Ende des Tankvorganges die Flüssigkeitssäule im Einfüllstutzen 2 stehenbleibt. Um das Entleeren der Flüssigkeitssäule aus dem Einfüllstutzen 2 in den Kraftstofftank 1 nach dem Ende des Tankvorganges zu ermöglichen, wird eine an das obere Ende des Einfüllstutzens 2 angeschlossene Druckausgleichsleitung 12 vorgesehen, welche über eine durch einen weiteren Kolben 13 gebildete Schaltstrecke des Mehrwegventiles 5 in der Betankungsstellung (Fig. 1) gesperrt und in der Betriebsstellung (Fig. 2) in der nachfolgend erörterten Weise zur Abzugleitung 6 durchgeschaltet wird.

Im einzelnen ist die Druckausgleichsleitung 12 nach dem Passieren des Mehrwegeventiles 5 zum Eingang eines Überrollventiles 14 geführt, welches in die Betriebsentlüftungsleitung 4 dem Mehrwegeventil 5 vorgeordnet eingeschaltet ist. Alternativ könnte das Überrollventil 14 dem Mehrwegeventil 5 nachgeordnet sein, in welchem Fall die Druckausgleichsleitung 12 nach dem Mehrwegeventil 5 und vor dem Überrollventil 14 an die Betriebsentlüftungsleitung 4 angeschlossen ist.

Der Effekt des Verbleibens einer Flüssigkeitssäule kann auch in der Betankungsentlüftungsleitung 2 auftreten. Um dem entgegenzuwirken ist an das obere Ende der Betankungsentlüftungsleitung 3 ein Druckausgleichskanal 15 angeschlossen, welcher ebenfalls an den Eingang des Überrollventiles 14 geführt ist.

Die Betriebsweise der Vorrichtung ist wie folgt. Während des Tankvorganges (Fig. 1) werden die Betriebsentlüftungsleitung 4 und der Druckausgleichskanal 15 vom Kolben 6 und die Druckausgleichsleitung 12 vom Kolben 13 des Mehrwegeventiles 5 abgesperrt. Lediglich die großdurchmeßrige Betankungsentlüftungsleitung 3 ist zum Kraftstoffdampfauffangbehälter hin geöffnet. Nach dem Ende des Tankvorganges, in der Betriebsstellung (Fig. 2), ist die Betankungsentlüftungsleitung 3 durch den Kolben 7 des Mehrwegeventiles 5 verschlossen, wogegen die Betriebsentlüftungsleitung 4, die Druckausgleichsleitung 12 und der Druckausgleichskanal 15 über das Überrollventil 14 mit dem Kraftstoffdampfauffangbehälter in Verbindung stehen. In der Betriebsstellung ist somit ein druckloser Zustand des Kraftstofftankes 1, des Einfüllstutzens 2 und der Betankungsentlüftungsleitung 3 gewährleistet.

Anstelle des in Form eines Planschieberventiles gezeigten Mehrwegeventiles 5 kann jedes beliebige Ventil mit der gleichen Funktion verwendet werden, insbesondere jedes beliebige 6/2-Wegeventil. Auch die Betätigung des Mehrwegeventiles durch die Zapfpistole kann auf jede beliebige in der Technik bekannte Weise erfolgen.

## Patentansprüche

1. Vorrichtung zum Steuern der Gasströme und Flüssigkeitsniveaus in einem ORVR-Betankungssystem, dessen Kraftstofftank mit einem Einfüllstutzen, der einen eine Flüssigkeitssäule während des Tankvorganges aufbauenden Querschnitt aufweist, sowie mit einer großdurchmeßrigen Betankungsentlüftungsleitung und einer kleindurchmeßrigen Betriebsentlüftungsleitung versehen ist, wobei die Betankungs- und die Betriebsentlüftungsleitung über ein gemeinsames Mehrwegeventil zu einem Kraftstoffdampfauffangbehälter geführt sind, welches Mehrwegeventil durch Einführen einer Zapfpistole in den Einfüllstutzen von einer Betankungsstellung, in der die Betankungsentlüftungsleitung geöffnet und die Betriebsentlüftungsleitung geschlossen ist, in eine Betriebsstellung, in welcher die Betriebsentlüftungsleitung geöffnet und die Betankungsentlüftungsleitung geschlossen ist, versetzbar ist, und wobei eine an das obere Ende des Einfüllstutzens angeschlossene kleindurchmeßrige Druckausgleichsleitung mit dem Kraftstoffdampfauffangbehälter in Verbindung setzbar ist, dadurch gekennzeichnet, daß die Druckausgleichsleitung (12) über eine gesonderte Schaltstrecke (13) des gemeinsamen Mehrwegeventil (5) geführt ist, welche die Druckausgleichsleitung (12) in der Betankungsstellung absperrt und in der Betriebsstellung durchschaltet.

2. Vorrichtung nach Anspruch 1, bei welcher in die Betriebsentlüftungsleitung ein Überrollventil eingeschaltet ist, dadurch gekennzeichnet, daß die Druckausgleichsleitung (12) nach Passieren des Mehrwegeventiles (5) gemeinsam mit der Betriebsentlüftungsleitung (4) über das Überrollventil (14) zum Kraftstoffdampfauffangbehälter geführt ist.

3. Vorrichtung nach Anspruch 2, dadurch gekennzeichnet, daß an das obere Ende der Betankungsentlüftungsleitung (3) ein kleindurchmeßriger Druckausgleichskanal (15) angeschlossen ist, der gemeinsam mit der Betriebsentlüftungsleitung (4) und der Druckausgleichsleitung (12) über das Überrollventil (14) zum Kraftstoffdampfauffangbehälter geführt ist.

4. Vorrichtung nach einem der Ansprüche 1 bis 3, dadurch gekennzeichnet, daß das Mehrwegeventil (5) ein in die Betriebsstellung vorgespanntes, stößel- oder nockensteuerbares 6/2-Wegeventil ist, dessen Steuerstößel bzw. -nocken (8) in das Innere des Einfüllstutzens (2) ragt und von der Zapfpistole (9) betätigbar ist.
